# DEMANDE DE BREVET EUROPEEN

(11) **EP 1 585 043 A1**
(43) Date de publication de la demande: **12.10.2005**
(21) Numéro de dépôt: 04101411.9
(22) Date de dépôt: 06.04.2004
(51) Int. Cl.: G06F 17/60

(54) **Méthode de tracabilité d'un message électronique**

(71) Demandeur: Nagravision S.A., 1033 Cheseaux-sur-Lausanne (CH)
(72) Inventeur: Gaumain, Serge, 1400 Yverdon (CH)
(74) Mandataire: Wenger, Joel-Théophile

(57) **Abrégé**

Un des buts de l'invention est de proposer une méthode pour d'une part identifier la source qui a diffusé son adresse électronique à d'autres sites, et d'autre part de pouvoir interrompre tous les messages lorsqu'une telle source a été identifiée.

Ce but est atteint par une méthode de traçabilité d'un message électronique transmis par une entité tierce à une adresse électronique, cette méthode comprenant les étapes suivantes:
- requête de transmission d'une adresse électronique par une première entité à un utilisateur disposant d'une adresse personnelle,
- création d'une adresse électronique spécifique liée à cette entité et transmission de ladite adresse spécifique à ladite entité,
- définition d'une opération de copie ou alias entre cette adresse spécifique et l'adresse personnelle de l'utilisateur,
- réception d'un message à l'adresse spécifique transmis par un organisme tiers,
- routage du message de l'adresse spécifique à l'adresse personnelle de l'utilisateur,
- détermination du premier organisme sur la base de l'adresse spécifique utilisée pour adresser le message.

## Description

Cette demande concerne le domaine de la messagerie électronique, en particulier traite du problème de courriers non désirés.

Ce problème est bien connu dans le monde Internet sous l'appellation "spam".

La boîte aux lettres électronique est souvent encombrée de publicité, quand ce n'est pas des virus informatiques.

Une fois qu'une adresse électronique est transmise à un site, la propagation de cette adresse ne peut plus être contrôlée par le titulaire et ce dernier doit se contenter de l'étique du fournisseur du site.

Une des parades consiste à définir des listes d'expéditeurs indésirables pour lesquels les messages sont tout simplement bloqués.

Les programmes anti-spam sont confrontés au fait qu'il est très difficile, pour de tels programmes, de faire la différence entre un message indésirable et des nouvelles régulièrement envoyées à un grand nombre d'utilisateurs. Dans les deux cas, les adresses des destinataires ne sont pas visibles.

Ainsi, un des buts de l'invention est de proposer une méthode pour d'une part identifier la source qui a diffusé son adresse électronique à d'autres sites, et d'autre part de pouvoir interrompre tous les messages lorsqu'une telle source a été identifiée.

Ce but est atteint par une méthode de traçabilité d'un message électronique transmis par une entité tierce à une adresse électronique, cette méthode comprenant les étapes suivantes:
- requête de transmission d'une adresse électronique par une première entité à un utilisateur disposant d'une adresse personnelle,
- création d'une adresse électronique spécifique liée à cette entité et transmission de ladite adresse spécifique à ladite entité,
- définition d'une opération de copie ou alias entre cette adresse spécifique et l'adresse personnelle de l'utilisateur,
- réception d'un message à l'adresse spécifique transmis par un organisme tiers,
- routage du message de l'adresse spécifique à l'adresse personnelle de l'utilisateur,
- détermination du premier organisme sur la base de l'adresse spécifique utilisée pour adresser le message.

Cette méthode est basée sur l'utilisation d'alias ou de routage entre une adresse spécifique et l'adresse réelle de l'utilisateur. Selon le service que l'on utilise pour la messagerie électronique, il est possible de créer des adresses qui n'ont qu'une fonctionnalité d'intermédiaire. Cette fonction est connue sous l'appellation "alias" mais peut être également une boîte aux lettres temporaire qui copie le contenu à l'adresse réelle de l'utilisateur.

Ainsi, selon la méthode de l'invention, lorsqu'un site demande une adresse électronique, soit pour envoyer un mot de passe, soit pour autoriser un téléchargement, par exemple, la méthode consiste à créer une adresse électronique propre à ce site et de créer un lien, dans son propre système de gestion de messagerie, entre cette adresse nouvellement créée et l'adresse réelle de l'utilisateur.

De plus, la méthode consiste à mémoriser l'adresse ainsi créée associée au nom du site qui avait requis une telle adresse.

Cette méthode s'étend également à la production de statistiques sur l'utilisation de cette adresse e-mail.

Selon une variante de l'invention, le procédé initialisé par l'utilisateur lors de la création d'une adresse spécifique peut également interroger le site afin qu'il fournisse son adresse e-mail. L'utilisateur dispose d'un nom de site, par exemple l'adresse URL du site, son adresse e-mail et l'adresse spécifique de l'utilisateur.

Grâce à ces informations, une messagerie gérée selon le procédé de l'invention peut filtrer automatiquement les messages du fait que cette adresse spécifique ne peut être utilisée que par un seul expéditeur. La présente description inclus également le fait que l'on groupe plusieurs expéditeurs sur une adresse spécifique.

L'invention sera mieux comprise grâce à la description détaillée qui va suivre et qui se réfère aux dessins annexés qui sont donnés à titre d'exemple nullement limitatif, à savoir:
- la figure 1 illustre une page d'un site requérant l'introduction d'une adresse électronique,
- la figure 2 illustre le mécanisme de création d'une adresse spécifique,
- la figure 3 illustre les données stockées dans l'ordinateur de l'utilisateur.

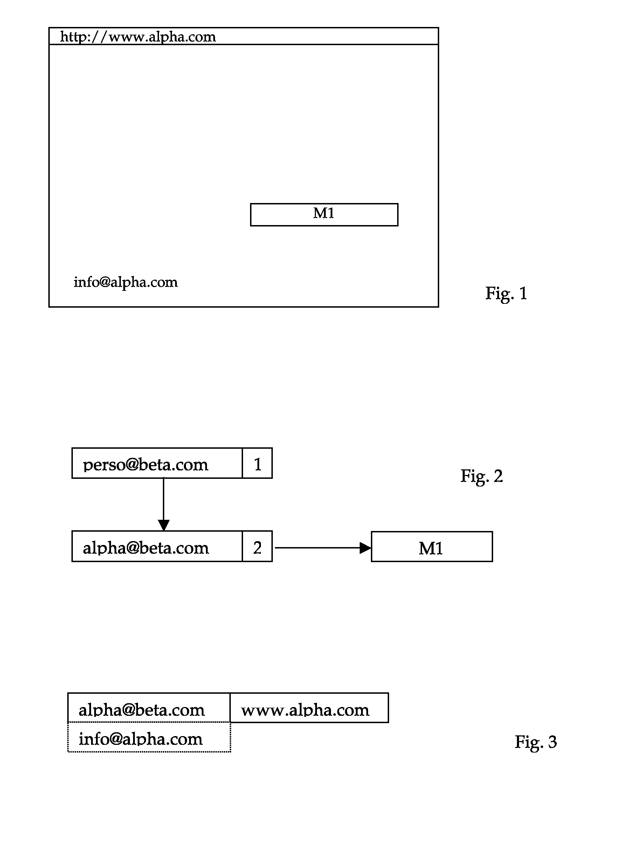

La figure 1 est un schéma bien connu dans lequel un site, dans notre exemple www.alpha.com propose à un utilisateur d'introduire son adresse électronique dans le champ M1.

Au bas de la fenêtre se trouve l'adresse électronique du site, dans cet exemple info@alpha.com.

Lorsque l'utilisateur est placé devant une telle fenêtre, il déclenche le processus de l'invention illustré par la figure 2. Selon notre exemple, l'adresse personnelle de l'utilisateur est perso@beta.com. (selon l'étape 1). Une adresse spécifique est créée sous l'appellation alpha@beta.com, adresse qui est spécifique au site visité www.alpha.com. Pour des raisons de visibilité, il a été choisi un nom spécifique en relation avec le site visité. On peut bien entendu utiliser n'importe quel nom, par exemple un mot aléatoire afin de ne pas alerter le site de cette opération.

L'adresse ainsi créée est transférée dans le champ (M1) prévu à cet effet de la page du site demandeur.

La figure 3 illustre les données que l'utilisateur va stocker sur son ordinateur. Il va mémoriser l'adresse spécifique alpha@beta.com avec le site visité à savoir www.alpha.com. Un lien est créé dans la messagerie de l'utilisateur pour que les messages arrivant à l'adresse spécifique alpha@beta.com soient transmis à l'adresse personnelle perso@beta.com.

Selon une variante, le processus de l'invention peut soit demander au site de fournir son adresse électronique (info@alpha.com) ou scruter les pages du site pour en extraire son adresse électronique. On peut bien sûr imaginer un protocole d'échange entre le processus de l'invention et le site pour échanger les deux adresses électroniques.

Ainsi, sur la base des informations dans l'ordinateur de l'utilisateur, il est possible de filtrer tous les messages entrants du fait que l'adresse de l'expéditeur et du destinataire doivent correspondre aux données stockées par l'ordinateur.

Dans le cas ou l'adresse de l'expéditeur ne correspond pas, non seulement il est possible de bloquer la transmission mais de retourner le message provenant d'un autre expéditeur à l'adresse du site initial www.alpha.com via son adresse électronique (info@alpha.com). Ceci dans un premier but d'information dans le cas où l'adresse d'expéditeur aurait changé, ou dans un second but pour avertir le site que l'adresse qui lui a été confiée a été utilisée à des fins non autorisées.

Comme mentionné plus haut, dans le cas où un abus a été détecté, l'utilisateur peut interrompre le lien entre l'adresse spécifique et l'adresse personnelle.

## Revendications

1. Méthode de traçabilité d'un message électronique transmis par une entité tierce à une adresse électronique, cette méthode comprenant les étapes suivantes:
- requête de transmission d'une adresse électronique par une première entité à un utilisateur disposant d'une adresse personnelle,
- création d'une adresse électronique spécifique liée à cette entité et transmission de ladite adresse spécifique à ladite entité,
- définition d'une opération de copie ou alias entre cette adresse spécifique et l'adresse personnelle de l'utilisateur,
- réception d'un message à l'adresse spécifique transmis par un organisme tiers,
- routage du message de l'adresse spécifique à l'adresse personnelle de l'utilisateur,
- détermination du premier organisme sur la base de l'adresse spécifique utilisée pour adresser le message.

2. Méthode de traçabilité selon la revendication 1, **caractérisée en ce qu'**elle comprend, lors de la création de l'adresse spécifique, une étape de requête et d'obtention de l'adresse électronique de la première entité.

3. Méthode de traçabilité selon la revendication 2, **caractérisée en ce que**, lors de la réception d'un message électronique à l'adresse spécifique, les étapes suivantes sont effectuées :
- extraction de l'adresse électronique de l'émetteur,
- comparaison de cette adresse avec l'adresse électronique de la première entité,
- marquage du message si les deux adresses diffèrent.

4. Méthode de traçabilité selon la revendication 3, **caractérisée en ce que** le message reçu est rejeté.

5. Méthode de traçabilité selon la revendication 3, **caractérisée en ce que** le message reçu est renvoyé à l'adresse de la première entité.
